## Europäisches Patentamt
## European Patent Office
## Office européen des brevets

(11) Publication number: **0 034 468**
**A1**

(12) # EUROPEAN PATENT APPLICATION

(21) Application number: **81300573.3**

(22) Date of filing: **12.02.81**

(51) Int. Cl.³: **B 23 K 1/18**

(30) Priority: **15.02.80 GB 8005217**

(43) Date of publication of application:
**26.08.81 Bulletin 81/34**

(84) Designated Contracting States:
**AT BE CH DE FR GB IT LI NL SE**

.

(71) Applicant: JOHNSON, MATTHEY & Co., LIMITED
43 Hatton Garden
London EC1N 8EE(GB)

(72) Inventor: Notton, John Harold Frederick
16 Crawshay Drive
Emmer Green Reading Berkshire(GB)

(72) Inventor: Shropshall, Michael Rodney
34 Conisboro Avenue
Caversham Reading Berkshire(GB)

(74) Representative: Arthur, Bryan Edward et al,
Withers & Rogers 4 Dyer's Buildings Holborn
London EC1N 2JT(GB)

(54) Improvements in and relating to the joining of tubes.

(57) This invention relates to the joining together by brazing or soldering of metal tubing.

In more detail the invention is directed to a coupling for joining together lengths of metal tubing by brazing or soldering, the coupling comprising at least two sockets, each socket having one or more indentations formed in its inner surface with each indentation carrying a deposit comprising a thermoplastic brazing or soldering material.

EP 0 034 468 A1

- 1 -

## "Improvements in and relating to the joining of tubes"

This invention relates to the joining together by brazing or soldering of metal tubing.

Lengths of metal tubing are frequently joined together by soldering or brazing in which joining means, commonly known in the art as fittings, unions or couplings (herein simply referred to as "couplings") are utilised. Such couplings usually comprise two or more sockets with each socket formed to receive, with marginal clearance, an end portion of a length of tubing and carrying in an annular groove or recess around its inner surface a brazing alloy or a soldering alloy. In use, an end portion of tubing is inserted into a socket and upon heating of the coupling and the said end portion, molten brazing alloy or soldering alloy flows by capillary action between the inner surface of the socket and the outer surface of the tubing (the "jointing surfaces") to produce, on cooling a strong and durable joint.

In one simple embodiment, a coupling may be used for joining two sections of tubing in a substantially straight line, both sections of tubing having the same nominal external diameter. More complex couplings may involve the use of bends or elbows

- 2 -

and/or reducing bores and/or means for joining more than two sections of tubing, for example, take the form of tee, cross or "Y" pieces.

We have now found that the brazing alloy or soldering alloy may be replaced with thermoplastic brazing or soldering material.

According to one aspect of the present invention, therefore, a coupling (as hereinbefore defined) comprises at least two sockets, each socket having one or more indentations, for example grooves or recesses formed in its inner surface with each indentation (groove or recess) carrying a deposit comprising a thermoplastic brazing or soldering material.

The internal diameter of each socket should generally be such that it fits over a section of tubing with a tolerance so that the brazing or soldering composition will, when molten, flow by capillary action between the "jointing surfaces". Naturally, the brazing or soldering composition should not project from the groove or recess into the socket to an extent greater than that which will permit the entry of a section of tubing of the appropriate size.

Each groove or recess may take the form of a peripherally continuous or discontinuous annulus, that is to say, an endless or broken groove or recess, or it may take another form, for example that of a continuous or discontinuous helix or a spiral or a series or pattern of recesses may be used. Furthermore, we have found that the internal cross-sectional profile of the groove or recess may have a significant effect on the ease of carrying out the jointing operation and on the quality of the joint when formed. Under certain circumstances, it may be necessary or desirable to have a groove which is relatively broad and shallow whereas a relatively deeper and/or narrower groove or, for example, a groove having an arcuate inner cross - sectional profile may be preferred. Each indentation may have a part circular cross-sectional shape selected from the group consisting of a semi-circular segment of a circle having a chord coterminus with the inner surface of the socket and having a length less than the diameter of the said circle. Other modifications to the internal cross-sectional profile are within the scope of the invention. One factor which may limit the choice of profile is the desired thickness of the socket walls. Where the socket walls are insufficiently thick to accept a groove or recess formed therein by removal of metal, the groove or recess may be rolled or otherwise formed in the socket wall. In such a case the existence of a groove or recess will be reflected in the external shape of the socket wall.

Thermoplastic brazing compositions suitable for use with couplings according to the present invention are described in our co-pending British patent application No. 36655/78 filed on 13th September 1978 claiming priority from British Patent Application No. 38738/77 filed on 16th September 1977, and comprise a mixture of particulate brazing alloy and a thermoplastic material, optionally with the addition of flux. Thermoplastic soldering compositions suitable for use with couplings according to the present invention are described in our co-pending British patent Application No. 8010889 filed on 1st April 1980 and comprising a particulate soldering metal or alloy or oxide(s) reducible to said metal or alloy, a flux which may have thermoplastic properties and, if necessary, a thermoplastic binder.

In more detail, couplings according to the present invention consist essentially of one or more short, hollow, open-ended cylinders forming a ring, tee, "Y", or cross, for example, defining two or more sockets adapted to receive with marginal clearance the end portions of sections of tubing which it is desired to join together, the extent to which a section of tubing can be inserted into a socket being limited by an internal annular shoulder, each socket having in its inner surface and between its open end and said shoulder one or more essentially annular grooves or recesses, each of said grooves or recesses carrying a deposit comprising a thermoplastic brazing material or thermoplastic soldering material.

Couplings according to the present invention may very simply be made by assembling and/or machining a blank(that is, devoid of brazing or soldering material) coupling and then inserting into each groove or recess thermoplastic brazing material or thermoplastic soldering material by extrusion moulding for example.

Brazing or soldering operations may be carried out in a similar fashion to that using prior art couplings, that is to say, by inserting the ends of sections of tubing into the coupling, suitable cleaning and other preliminary operations having first been carried out and applying heat, for example from a blowlamp, to melt and burn away the thermoplastic material, melt flux if used, and melt the brazing or soldering alloy which then flows by capillary action between the"jointing surfaces" to form, on cooling a strong and durable joint. The need for any separate fluxing operation is thus avoided. We have found that the thermoplastic material is very satisfactorily "chased out" from the grooves or recess and away from the"jointing surfaces" on application of heat and does not in any way interfere with the successful formation of a joint.

The temperature to which it is necessary to heat the coupling is generally in the range 200-300°C for soldering and greater than about 450°C for brazing operations.

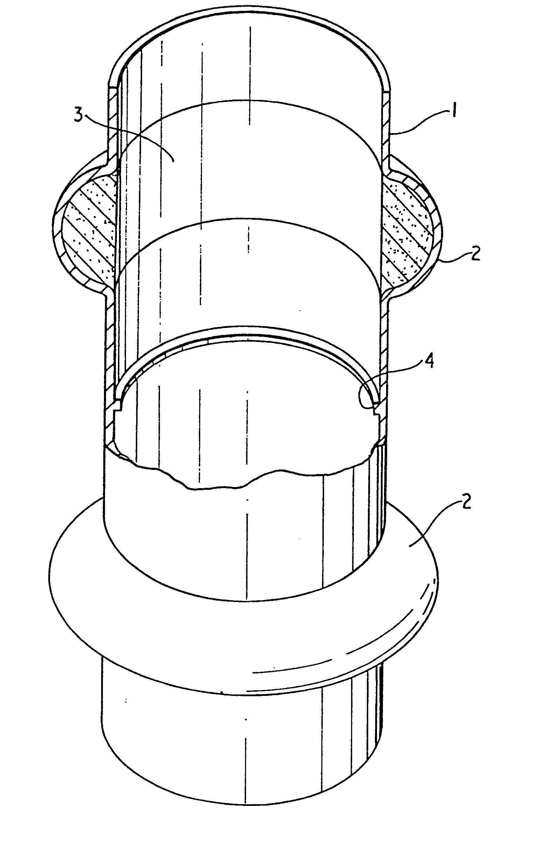

One form of straight coupling in accordance with the invention is shown by way of example in the accompanying drawing. The drawing shows a straight coupling partially sectioned having a copper tube 1 formed with two semi-circular cross-sectioned annular grooves 2. Each groove is filled with a thermoplastic brazing or soldering material 3. The copper tube 1 is divided longitudinally into two sockets by an internally extending flange 4 which limits the distance a length of tube can be inserted into the tube.

CLAIMS.

--------

1.    A coupling for joining together lengths of metal tubing
by brazing or soldering, the coupling comprising at least
two sockets, each socket having one or more indentations formed
in its inner surface with each indentation carrying a deposit
comprising a thermoplastic brazing or soldering material.

2.    A coupling according to Claim 1 wherein each indentation
is in the form of a continuous or discontinuous annulus or a
continuous or discontinuous helix.

3.    A coupling according to Claim 1 wherein each indentation
has a part circular cross-sectional shape selected from the group
consisting of a semi circle and a segment of a circle having
a chord coterminus with the inner surface of the socket and
having a length less than the diameter of the said circle.

4.    A coupling according to Claim 1 wherein the thermoplastic
brazing material comprises a mixture of a particulate brazing
alloy and a thermoplastic material.

5.    A coupling according to Claim 4 wherein the thermoplastic brazing material includes a flux.

6.    A coupling according to Claim 1 wherein the thermoplastic soldering material comprises a particulate soldering metal or alloy or oxides reducible to the metal or alloy, a flux and optionally a thermoplastic binder.

**European Patent Office**

**EUROPEAN SEARCH REPORT**

Application number

EP 81 30 0573

## DOCUMENTS CONSIDERED TO BE RELEVANT

| Category | Citation of document with indication, where appropriate, of relevant passages | Relevant to claim |
|---|---|---|
| D | GB - A - 2 004 489 (JOHNSON) <br> * Abstract * <br><br> -- | 1,4-6 |
| PED | GB - A - 2 049 523 (JOHNSON) published 31-12-1980; filed 01-04-1980) <br> * Abstract * <br><br> -- | 1,4-6 |
| | FR - E - 74 572 (VALENTIN) <br> * Page 3, abstract * <br><br> -- | 1-3 |
| | US - A - 3 610 663 (AESOQUIP) <br> * Figures 2 and 3; column 3, line 5-7 and 35-46 * <br> & DE - A - 2 117 498 <br><br> -- | 1-3 |
| | US - A - 2 094 495 (MUELLER BRASS) <br> * Figure 3 * <br><br> ---- | 1-3 |

**CLASSIFICATION OF THE APPLICATION (Int. Cl.³)**

B 23 K 1/18

**TECHNICAL FIELDS SEARCHED (Int. Cl ³)**

B 23 K 1/18

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-05-1981 | HOORNAERT |

EPO Form 1503.1 06.78